# FASCICULE DE BREVET EUROPEEN

(11) **EP 0 555 111 B1**
(45) Date de publication et mention de la délivrance du brevet: **29.11.1995**
(21) Numéro de dépôt: 93400081.1
(22) Date de dépôt: 12.01.1993
(51) Int. Cl.: B60P 7/13, B61D 45/00

(54) **Organe de maintien d'un conteneur sur une plateforme de chargement d'un véhicule et véhicules pourvus de tels organes de maintien**
Vorrichtung zum Halten eines Containers auf einer Kraftfahrzeugplattform und Kraftfahrzeuge mit einer solchen Vorrichtung
Device for holding a container on a loading platform of a vehicle and vehicle comprising such a device

(30) Priorité: 04.02.1992 FR 9201640
(43) Date de publication de la demande: 11.08.1993
(73) Titulaire: ARBEL FAUVET RAIL S.A., F-59506 Douai Cédex (FR)
(72) Inventeur: Vilette, Christian, F-59870 Vred (FR)
(74) Mandataire: Ecrepont, Robert

(56) Documents cités:
- EP-A- 0 292 369
- DE-U- 7 333 060
- US-A- 2 071 355
- US-A- 3 160 117
- US-A- 3 557 710

## Description

L'invention se rapporte à un organe de maintien d'un conteneur sur une plateforme de chargement d'un véhicule tel un wagon de chemin de fer ou un véhicule routier.

Elle se rapporte également aux véhicules pourvus de tels organes de maintien.

Pendant leur transport tant par rail que par route, les conteneurs doivent être immobilisés sur leur plateforme.

A cet effet, il est connu (FR-A-2.504.484, 2.449.013 et 2.542.511) d'équiper ces plateformes de dispositifs d'immobilisation de conteneurs comprenant des chevilles destinées à s'engager dans des logements prévus à cet effet dans la base des conteneurs et notamment aux quatre coins de leur base.

Ces logements sont notamment formés dans des pièces communément dénommés dés ou pièces coin.

Pour immobiliser le conteneur en translation suivant une direction orthogonale à l'axe longitudinal du wagon :
- d'une part, chaque cheville présente localement deux surfaces de positionnement diamétralement opposées, l'une dite interne tournée vers l'axe médian de la plateforme et l'autre dite externe et,
- d'autre part, chaque logement comporte deux surfaces également diamétralement opposées dites de blocage, l'une dite interne placée en vis à vis de la surface de positionnement interne et l'autre dite externe en vis à vis de la surface de positionnement externe.

Si ces conteneurs possèdent une dimension transversale qui est, généralement, invariable par contre leurs dimensions longitudinales sont modulées selon des normes.

Une même plateforme peut de ce fait recevoir des conteneurs de dimensions différentes.

Les emplacements où, au long de la plateforme, trouveront place les logements des conteneurs et donc doivent se situer des chevilles sont de ce fait variables.

Il est impossible de prévoir, à tous les emplacements posssibles, une cheville fixe car celle-ci gênerait alors la mise en place d'un conteneur de dimensions différentes de celles pour lesquelles la cheville considérée conviendrait.

A cet effet, il est connu d'associer les chevilles à la plateforme par des moyens permettant de ne laisser en saillie au dessus de la plateforme à leur bonne place que les chevilles utiles à un chargement spécifique.

Un de ces moyens consiste en un guidage en translation axiale de la cheville combinée à un moyen de verrouillage de cette cheville en position active par un mouvement de rotation de la cheville autour de son axe d'où le nom de "TWISTLOCK" communément donné à cette cheville.

Selon une autre forme de réalisation conforme aux normes dites "ISO" (FR-A-2.615.462), la cheville est portée par une semelle associée à la plateforme par une articulation autour d'un axe parallèle à l'axe longitudinal du véhicule, déporté vers l'extérieur par rapport à l'axe de la cheville ; l'organe de maintien que forme la cheville et la semelle peut ainsi être basculé vers l'extérieur de la surface d'appui du conteneur.

Généralement, l'axe d'articulation de la semelle est matérialisé par un rail au long duquel la semelle peut coulisser notamment entre sa position active et au moins une position dans laquelle elle a accés à un logement permettant de l'éclipser avec sa cheville sous le plan de la plateforme.

Outre la cheville, la semelle de maintien est généralement pourvue d'une butée dont la face active est tournée vers l'extérieur de la plateforme et limite la rotation de l'organe de maintien vers l'extérieur de la plateforme afin d'éviter son positionnement en interférence avec le gabarit.

Ce type de montage a en plus l'avantage de permettre de limiter le nombre de chevilles par plateforme puisque, grâce à un rail de longueur adaptée, les semelles peuvent coulisser sur une longueur suffisante pour être placées en tout endroit choisi.

Quel que soit le mode d'association des chevilles, lorsque les dites chevilles sont positionnées, les conteneurs sont placés avec leur logement en vis à vis des chevilles puis le conteneur est descendu de sorte que ses logements viennent s'enfiler sur ces chevilles.

Au delà de leur mode d'association à la plateforme, pour des raisons étrangères à l'invention, les chevilles dites "ISO" diffèrent de celles appelées "TWISTLOCK" par la forme de leur zone dite active qui correspond à leur partie qui est située entre le plan d'appui de la pièce de coin et leur partie terminale généralement sensiblement tronconique pour en faciliter l'introduction dans leur logement.

La cheville dite "TWISTLOCK" présente en effet dans cette zone active une section constante alors que la cheville dite "ISO" présente à la base de cette zone, soit sur la hauteur où cette zone coopère avec les surfaces de blocage des logements des conteneurs, une section transversale plus faible qu'en partie supérieure de cette zone où la section est comparable à celle de cheville dite "TWISTLOCK".

Du fait de leur section maximale identique, ces deux types de cheville appellent donc des logements de sections identiques.

De ce fait, lorqu'un conteneur est placé sur une plateforme équipée avec les chevilles type "ISO" qui, à la base de leur section active, sont de plus petite section que les chevilles dites "TWISTLOCK", le conteneur peut nécessairement se déplacer latéralement sur la plateforme d'une distance supérieure à celle autorisée par les chevilles "TWISTLOCK" et, par exemple, de douze millimètres cinq avec la cheville dite "ISO" alors qu'il est de six millimètres cinq avec la cheville dite "TWISTLOCK".

Pour respecter un gabarit imposé, ce jeu supplémentaire affecte les dimensions de la plateforme et donc la surface de chargement et notamment oblige à réduire la distance entre les boggies et/ou la distance des parties en porte à faux de sorte qu'en courbe les flèches soient moins importantes.

Cela est d'autant plus gênant que le pays impose un gabarit déjà petit.

Un des résultats que l'invention vise à obtenir est un organe de maintien de conteneur dont -bien que la différence entre la section du logement et la section de la cheville soit supérieure au jeu nécessaire pour l'introduction de la cheville dans le logement et autorise de ce fait un déplacement transversal du conteneur supérieur à celui autorisé au niveau de l'entrée- permette de limiter les déplacements latéraux des dits conteneurs à une valeur maximale et, par exemple, proche de celle permise au niveau de l'entrée.

A cet effet, elle a pour objet un organe de maintien du type précité notamment caractérisé en ce que, outre la cheville, la semelle de l'organe de maintien présente sensiblement dans un plan perpendiculaire au dessus de la semelle et, parallèlement à son axe d'articulation, une face de butée qui, tournée vers l'axe médian de la plateforme, coopère avec une surface dite de référence présentée par le conteneur et cette butée est positionnée sur cette semelle de manière que, par rapport à une autre face de butée qui est portée par une semelle disposée symétriquement à la première par rapport à l'axe médian de la plateforme pour coopérer elle-même avec une seconde surface de référence du même conteneur, la distance entre les dites surfaces de butée ait une valeur qui ne dépasse la distance dite de référence mesurée entre les surfaces de référence du conteneur que de la valeur du jeu maximal autorisé ce qui permet de limiter la translation du conteneur selon l'axe transversal de la plateforme et donc vers l'extérieur de la plateforme à une valeur maximale prédéterminée et ce quel que soit le jeu entre cheville et logement.

Elle a également pour objet le véhicule pourvu de tels organes de maintien.

L'invention sera bien comprise à l'aide de la description ci-aprés faite à titre d'exemple non limitatif en regard du dessin ci-annexé qui représente schématiquement :

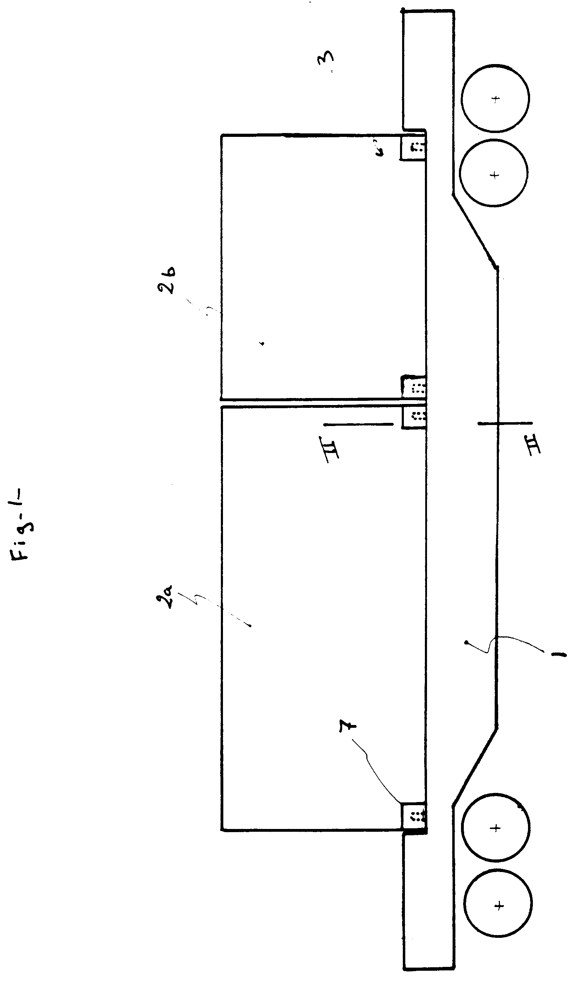

- figure 1 : une plateforme vue de profil,

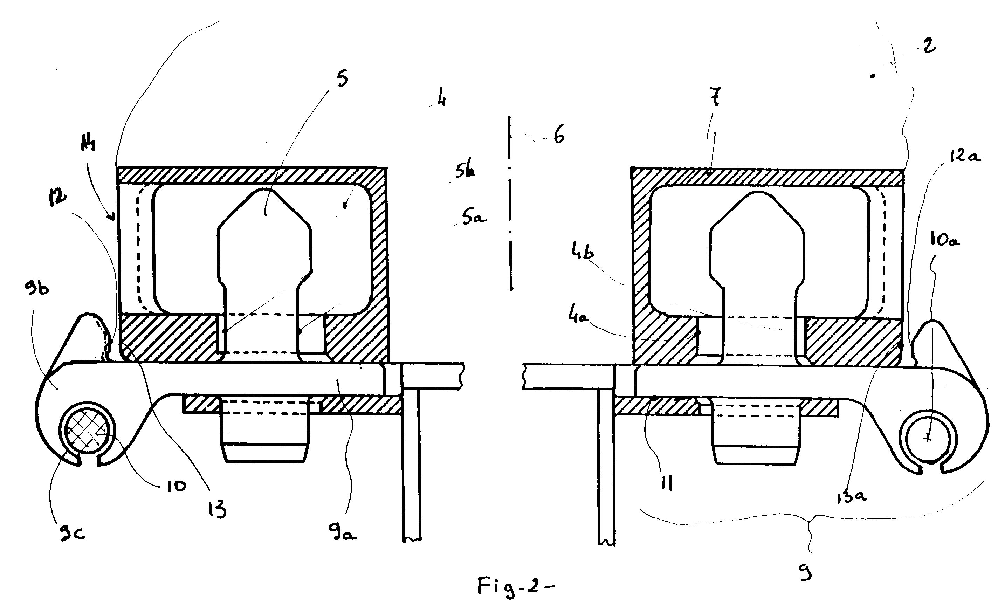

- figure 2 : à plus grande échelle, une coupe partielle selon II-II de la figure 1.

En se reportant au dessin, on voit que la plateforme 1 de chargement supporte des conteneurs 2 (2a, 2b).

Classiquement, ces conteneurs ont une forme parallélépipédique et des dimensions longitudinales variant selon des normes tandis que, pour des raisons de gabarit, leur dimension transversale est généralement invariable.

Pour positionner les conteneurs sur la plateforme 1, d'une part, chaque conteneur comprend notamment, à chacun de ses coins 3 une pièce dite ce coin qui présente un logement 4 de section prédéfinie et, d'autre part, la plateforme 1 est pourvue de chevilles 5 qui, lorsqu'elles sont rendues actives, font saillie au dessus de la plateforme 1 et s'engagent dans les logements 4 précités afin de limiter le déplacement en translation du conteneur sur la plateforme.

Chaque pièce de coin forme généralement un dè 7.

Dans un plan perpendiculaire à l'axe longitudinal 6 du véhicule, le positionnement précité s'opère par coopération :
- de chacune des surfaces 5a, 5b de positionnement diamétralement opposées présentées localement par chaque cheville 5, l'une 5a dite interne du fait qu'elle est tournée vers l'axe 6 médian de la plateforme et l'autre 5b dite externe,
- avec celle des deux surfaces opposées 4a, 4b dites de blocage présentée par chaque logement 4 qui est en vis à vis, l'une 4a de ces surfaces de blocage étant dite interne parce qu'elle est placée en vis à vis de la surface 5a de positionnement interne et l'autre 4b dite externe parce qu'elle est en vis à vis de la surface 5b de positionnement externe.

Lorsque, comme cela est surtout sensible avec les chevilles dites "ISO", la distance mesurée entre les deux surfaces 4a, 4b de blocage est supérieure à la distance mesurée entre les deux surfaces de positionnement 5a, 5b majorée du jeu de fonctionnement nécessaire, le conteneur peut alors se déplacer transversalement avec une amplitude significative.

Afin de limiter le nombre des chevilles 5 que doit comporter chaque plateforme et qui constituent ensemble le dispositif d'immobilisation des conteneurs 2a, 2b susceptibles d'y être chargés, les chevilles sont de chaque côté de la plateforme associées à la dite plateforme via des semelles 9a articulées autour d'un axe 10a parallèle à l'axe longitudinal de la plateforme et, par rapport à l'axe de la cheville, déporté du côté opposé à l'axe longitudinal de la cheville.

Chaque semelle 9a et sa cheville 5 forment ensemble un organe de maintien 9 destiné à coopérer avec l'un des logements 4.

L'axe 10a d'articulation de la semelle est matérialisé par un rail longitudinal 10 porté par des supports fixés à la plateforme.

Par exemple, le rail 10 présente une forme cylindrique de révolution et la semelle 9a de l'organe de maintien 9 est constituée d'une plaque 9a pourvue d'un charnon 9b qui, par son logement 9c, est enfilé sur le rail 10.

La semelle 9a de l'organe de maintien 9 repose sur le dessus d'un plan d'appui 11 solidarisé à la plateforme 1 tel, par exemple, le dessus d'une console.

Ce plan d'appui 11 se retrouve au moins en tous les points où une cheville 5 peut être nécessaire compte tenu de toutes les combinaisons des dimensions des conteneurs que pourra porter la plateforme.

Selon l'invention, outre la cheville 5, la semelle 9a de l'organe de maintien 9 présente sensiblement dans un plan perpendiculaire au dessus de la semelle et, parallèlement à son axe d'articulation, une face de butée 12 qui, tournée vers l'axe médian 6 de la plateforme, coopère avec une surface 13 dite de référence présentée par le conteneur et cette butée est positionnée sur cette semelle de manière que, par rapport à une autre face de butée 12a qui est portée par une semelle disposée symétriquement à la première par rapport à l'axe médian de la plateforme pour coopérer elle-même avec une seconde surface de référence 13a du même conteneur, la distance entre les dites surfaces de butée 12, 12a ait une valeur qui ne dépasse la distance dite de référence mesurée entre les surfaces de référence 13, 13a du conteneur que de la valeur du jeu maximal autorisé ce qui permet de limiter la translation du conteneur selon l'axe transversal de la plateforme et donc vers l'extérieur de la plateforme à une valeur maximale prédéterminée et ce quel que soit le jeu entre cheville et logement.

La surface de référence 13, 13a est avantageusement formée par la face latérale 14 externe de la pièce de coin 7 dans laquelle est constitué le logement 4.

Le fait que les semelles qui portent ces faces de butée soient articulées sur la plateforme permet de les éclipser de même manière que les chevilles.

Par ailleurs, malgré cette articulation, la charge que représentent les conteneurs assurent leur maintien en bonne position.

## Revendications

1. Organe de maintien d'un conteneur sur une plateforme de chargement d'un véhicule où, pour positionner les conteneurs sur la plateforme (1), d'une part, chaque conteneur comprend notamment, à chacun de ses coins (3) une pièce dite de coin qui présente un logement (4) de section prédéfinie et, d'autre part, la plateforme (1) est pourvue de chevilles (5) qui, lorsqu'elles sont rendues actives, font saillie au dessus de la plateforme (1) et s'engagent dans les logements (4) précités afin de limiter le déplacement en translation du conteneur sur la plateforme,
lesquelles chevilles sont de chaque côté de la plateforme associées à la dite plateforme via des semelles (9a) articulées autour d'un axe (10a) parallèle à l'axe longitudinal de la plateforme et, par rapport à l'axe de la cheville, déporté du côté opposé à l'axe longitudinal de la cheville, chaque semelle (9a) et sa cheville (5) formant ensemble un organe de maintien (9) destiné à coopérer avec l'un des logements (4),
cet organe de maintien étant **CARACTERISE** en ce que, outre la cheville (5), la semelle (9a) de l'organe de maintien (9) présente sensiblement dans un plan perpendiculaire au dessus de la semelle et, parallèlement à son axe d'articulation, une face de butée (12) qui, tournée vers l'axe médian (6) de la plateforme, coopère avec une surface (13) dite de référence présentée par le conteneur et cette butée est positionnée sur cette semelle de manière que, par rapport à une autre face de butée (12a) qui est portée par une semelle disposée symétriquement à la première par rapport à l'axe médian de la plateforme pour coopérer elle-même avec une seconde surface de référence (13a) du même conteneur, la distance entre les dites surfaces de butée (12, 12a) ait une valeur qui ne dépasse la distance dite de référence mesurée entre les surfaces de référence (13, 13a) du conteneur que de la valeur du jeu maximal autorisé ce qui permet de limiter la translation du conteneur selon l'axe transversal de la plateforme et donc vers l'extérieur de la plateforme à une valeur maximale prédéterminée et ce quel que soit le jeu entre cheville et logement.

2. Organe de maintien selon la revendication 1 **caractérisé** en ce que la surface de référence (13, 13a) est avantageusement formée par la face latérale (14) externe de la pièce de coin (7) dans laquelle est constitué le logement (4).

3. Véhicule **caractérisé** en ce qu'il est pourvu d'organes de maintien selon la revendication 1 ou 2.

## Claims

1. A device for holding a container on a vehicular loading platform, wherein in order to position the containers on the platform (1), on the one hand, each container comprises a so-called corner part at each of its corners (3), the said part having a seat (4) of a pre-determined cross-section, and, on the other hand, the platform (1) is provided with pins (5) which once they have been made active project upwards from the platform (1) and engage in the aforementioned seats (4) in order to limit the translatory displacement of the container on the platform, the said pins on each side of the platform being associated with the said platform via plates (9a) articulated about an axis (10a) parallel to the longitudinal axis of the platform and offset relative to the axis of the pin to the side opposite the longitudinal axis of the pin, each plate (9a) and associated pin (5) forming a combined holding device (9) intended to co-operate with one of the seats (4), the said holding device being **characterised in that** in addition to the pin (5), the plate (9a) of the holding device (9) has a stop surface (12) located substantially in a plane perpendicular to the top of the plate and parallel to the axis of articulation thereof, and the said stop surface is turned towards the median axis (6) of the platform and co-operates with a so-called reference surface (13) of the container, and the said stop surface is located on the said plate in such a way that - with regard to another stop surface (12a) supported by a plate arranged symmetrically to the first plate relative to the median axis of the platform, so as to co-operate with a second reference surface (13a) of the said container - the distance between the said stop surfaces (12, 12a) does not exceed the so-called reference distance measured between the reference surfaces (13, 13a) of the container by any greater extent than the maximum authorised clearance value, thus allowing the translatory displacement of the container along the transverse axis of the platform and hence towards the exterior of the platform to be limited to a maximum pre-determined value regardless of the clearance between the pin and the seat.

2. A holding device according to claim 1, **characterised in that** the reference surface (13, 13a) is advantageously formed by the outer lateral surface (14) of the corner part (7) in which the seat (4) is formed.

3. A vehicle, **characterised in that** it is fitted with holding devices according to claim 1 or 2.

## Patentansprüche

1. Vorrichtung zum Halten eines Containers auf einer Ladefläche eines Kraftfahrzeugs, auf welcher einerseits zur Positionierung der Container auf der Plattform (1) jeder Container insbesondere an jeder seiner Ecken (3) ein sogenanntes Keilstück umfaßt, welches eine Aufnahme (4) mit vorgegebenem Querschnitt aufweist, und andererseits die Plattform bzw. Ladefläche (1) mit Zapfen (5) versehen ist, die dann, wenn sie wirksam werden, über die Ladefläche (1) nach oben vorstehen und in die vorgenannten Aufnahmen (4) eingreifen, um die Verschiebung des Containers auf der Ladefläche zu begrenzen,
wobei die Zapfen auf jeder Seite der Ladefläche derselben über Flansche (9a) zugeordnet sind, die um eine zur Längsachse der Ladefläche parallele Achse (10a) angelenkt und bezüglich der Achse des Zapfens auf der der Längsachse des Zapfens gegenüberliegenden Seite versetzt sind, wobei jeder Flansch (9a) zusammen mit dem zugehörigen Zapfen (5) eine Haltevorrichtung (9) zum Zusammenwirken mit einer der Aufnahmen (4) bildet,
**dadurch GEKENNZEICHNET**, daß der Flansch (9a) der Haltevorrichtung (9) außer dem Zapfen (5) im wesentlichen in einer senkrechten Ebene über dem Flansch und parallel zu seiner Anlenkachse eine Anschlagfläche (12) aufweist, die unter Zuwendung zur Mittelachse (6) der Ladefläche hin mit einer sogenannten Bezugsfläche (13) zusammenwirkt, welche am Container ausgebildet ist, und daß dieser Anschlag auf diesem Flansch so positioniert ist, daß er, bezogen auf eine andere Anschlagfläche (12a), welche ein zur Mittelachse der Ladefläche symmetrisch angeordneter Flansch trägt, seinerseits mit einer zweiten Bezugsfläche (13a) desselben Containers zusammenwirkt, wobei der Abstand zwischen den Anschlagflächen (12, 12a) einen Wert aufweist, der die zwischen den Bezugsflächen (13, 13a) des Containers gemessene sogenannte Bezugsdistanz nur um den Wert des höchstzulässigen Spiels übersteigt, wodurch es möglich ist, die Verschiebung des Containers entlang der Querachse der Ladefläche und somit nach außerhalb der Ladefläche auf einen vorgegebenen größtmöglichen Wert zu begrenzen, und zwar unabhängig vom Spiel zwischen Zapfen und Aufnahme.

2. Haltevorrichtung nach Anspruch 1, **dadurch gekennzeichnet,** daß die Bezugsfläche (13, 13a) vorteilhafterweise von der seitlichen Außenfläche (14) des Keilstücks (7) gebildet wird, in welchem die Aufnahme (4) ausgebildet ist.

3. Fahrzeug**, dadurch gekennzeichnet**, daß es mit Haltevorrichtungen nach Anspruch 1 oder 2 ausgerüstet ist.
